# FASCICULE DE BREVET EUROPEEN

(11) **EP 1 565 685 B1**
(45) Date de publication et mention de la délivrance du brevet: **20.08.2008**
(21) Numéro de dépôt: 03782558.5
(22) Date de dépôt: 14.11.2003
(51) Int. Cl.: F16L 37/084, F16L 37/08

(54) **RACCORD A SECURITE AUGMENTEE**
KUPPLUNG MIT VERBESSERTER SICHERHEIT
CONNECTOR WITH ENHANCED SAFETY

(30) Priorité: 25.11.2002 FR 0214728
(43) Date de publication de la demande: 24.08.2005
(73) Titulaire: LEGRIS SA, 35000 Rennes (FR)
(72) Inventeur: PODER, Philippe, F-35580 Guichen (FR); BLIVET, Philippe, F-35200 Rennes (FR)
(74) Mandataire: Robert, Jean-Pierre
(86) Numéro de dépôt international: PCT/FR2003/003373
(87) Numéro de publication internationale: WO 2004/051133

(56) Documents cités:
- DE-C- 10 115 399
- FR-A- 2 705 430
- US-A- 4 869 534
- US-A- 5 658 020

## Description

### DOMAINE DE L'INVENTION

La présente invention concerne un raccord à sécurité augmentée destiné à des applications de connexion exigeantes en terme de protection des usagers et de protection de l'environnement.

### ARRIERE PLAN DE L'INVENTION

Les raccords à verrouillage sont bien connus. De tels raccords comprennent un embout mâle, un embout femelle, une collerette ou gorge extérieure de l'embout mâle, et une butée mobile transversalement dans la paroi de l'embout femelle pour se loger dans la gorge ou derrière la collerette de l'embout mâle lorsqu'il est placé dans l'embout femelle.

Certains de ces dispositifs comportent un témoin de visualisation du caractère correct ou non de la connexion, afin de réduire les risques liés à un mauvais raccordement.

Du fait de la fabrication des raccords en matière plastique, la sécurité de ces liaisons ou connexions est limitée à des applications de circuits hydrauliques ou pneumatiques à pression moyenne. Or il existe notamment dans l'automobile, des circuits de fluide dans lesquels la pression de service est de plus en plus élevée.

Le document DE 10 115 399 C décrit un raccord selon le préambule de la revendication 1.

### OBJET DE L'INVENTION

Par l'invention, on vise à satisfaire à la fois l'exigence accrue de sécurité en matière de qualité de connexion et la demande d'un accroissement des caractéristiques de tenue mécanique d'un raccord pour contenir des pressions de plus en plus élevées.

### BREVE DESCRIPTION DE L'INVENTION

A cet effet, la présente invention a donc pour objet un raccord à sécurité renforcée selon l'ensemble combiné des caractéristiques de la revendication 1.

D'autres caractéristiques et avantages de l'invention ressortiront de la description de deux exemples de sa réalisation donnée ci-après à titre indicatif.

### BREVE DESCRIPTION DES DESSINS

Il sera fait référence aux dessins annexés parmi lesquels :
- les figures 1 et 2 sont deux vues extérieures d'un raccord selon l'invention dans la position de connexion de la cage par rapport à l'embout femelle,
- les figures 3 et 4 sont deux mêmes vues de ce mode de réalisation de l'invention, la cage étant dans sa position de verrouillage de la connexion,
- les figures 5 et 6 illustrent une variante de réalisation d'un raccord selon l'invention, par deux vues arrières des deux positions de connexion et de verrouillage de la cage selon l'invention mises en place sur l'embout femelle,
- la figure 7 est une vue extérieure du premier mode de réalisation de la cage seule.

### DESCRIPTION DETAILLEE DE L'INVENTION

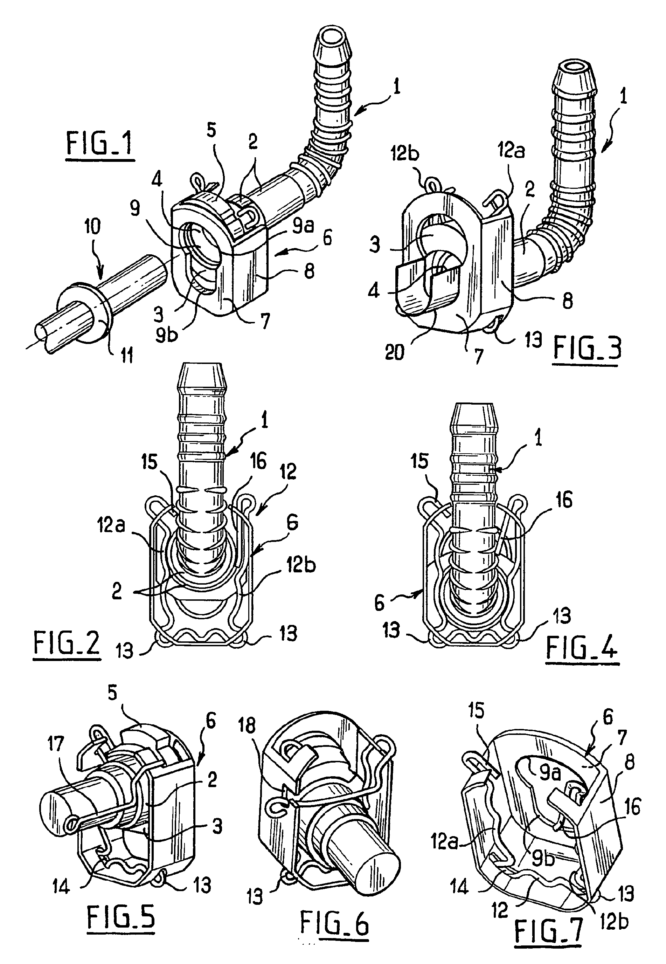

L'embout femelle représenté aux figures 1 à 4 est un embout coudé 1, qui comprend une section terminale de connexion définissant de manière connue un logement cylindrique étagé dont on aperçoit la paroi extérieure 2 sur les figures. A l'extrémité de ce logement cylindrique étagé, l'embout 1 comporte une embase 3 dont la forme est sensiblement carrée, qui est creuse et qui contient une bague de verrouillage 4 mobile transversalement au logement 2 dans l'embase creuse 3 à l'encontre d'organes élastiques qui la rappelle en position haute, position dans laquelle un poussoir 5 fait saillie de l'embase 3 et sert à la manoeuvre de la bague de verrouillage pour réaliser la déconnexion. Une structure de ce type est totalement illustrée par le document FR 2 705 430.

Sur chacune des figures on a également représenté une cage 6 qui comporte une paroi antérieure 7 formant capot frontal pourvu de rebords 8 s'étendant vers l'arrière. L'embase 3 peut être logée entre ces rebords, derrière la paroi frontale 7. La hauteur de la cage 6 est supérieure à la dimension prise dans cette direction de l'embase 3, si bien que la cage peut prendre plusieurs positions par rapport à cette embase dans le sens de cette hauteur.

Le capot frontal 7 de la cage est pourvu d'une ouverture 9 en trou de serrure. Ainsi, cette ouverture présente une partie 9a de contour circulaire et une partie 9b en U débouchant dans la partie 9a. L'ouverture frontale de l'embase creuse 3 possède un diamètre sensiblement identique à celui de la partie 9a de l'ouverture 9 en trou de serrure. La largeur de la partie 9b de cette ouverture 9 est bien entendu inférieure au diamètre de la partie 9a, si bien que quand l'embase 3 se trouve en regard de cette partie 9b, les bords de cette ouverture masquent partiellement l'ouverture frontale de cette embase 3. On comprend ainsi que lorsque l'ouverture de l'embase est en correspondance avec la partie 9a de l'ouverture 9, un embout mâle 10 avec une collerette 11 peut traverser l'ouverture et pénétrer dans l'embase donc la connexion de l'embout mâle et de l'embout femelle peut se réaliser. En revanche, dans l'autre position relative de la cage et de l'embase, la collerette 11 ne peut pénétrer à l'intérieur de l'embase creuse 3 ni, si elle y est déjà, en sortir.

La liaison de la cage 6 et de l'embout femelle 1 est assurée une épingle 12, en fil métallique, et maintenue dans la cage à distance du capot frontal 7 comme illustré par la figure 7. Cette épingle métallique est en forme générale de U, avec aux angles inférieurs, des oreilles 13 qui pénètrent dans des fentes 14 des parois latérales 8 de la cage 6. Chacune des branches 12a, 12b, du U possède un double cintre qui définit avec le double cintre.de l'autre branche, un moyen d'indexation en deux positions de la partie 2 de l'embout femelle coiffé par la cage 6. L'extrémité libre de la branche 12a est recourbée en un cliquet 15 tandis que l'extrémité libre de la branche 12b est recourbée en un cliquet 16 plus long que le cliquet 15. On remarque sur la figure 7 que la paroi 8 latérale de la cage 6 est échancrée en partie supérieure pour permettre d'introduire la cage sur l'embase 3 par glissement parallèle au capot frontal 7.

Pour maintenir l'épingle 12 solidaire de la cage 6, le fond du U que définit cette épingle 12 est ondulé, de sorte qu'après l'avoir mise en place dans les fentes 14, on écrase au moins partiellement les deux ondulations de ce fond, ce qui provoque son allongement et fait pénétrer sans possibilité d'en sortir, les deux oreilles 13 dans les fentes 14. Lorsqu'on coiffe l'embase creuse 3 de l'embout par la cage 8, la partie cylindrique étagée 2 située derrière l'embase 3 de l'embout 1 écarte à son passage les branches 12 jusqu'à se situer comme aux figures 2 et 5 dans une première position d'indexation dans laquelle d'une part le cliquet 15 revient par-dessus cette section de l'embout 1 et d'autre part les branches 12a et 12b se resserrent sur cette section 2 au niveau de leur premier cintre. Dans le même temps, le cliquet 16 est quant à lui, ainsi que l'illustre la figure 3, rabattu contre la branche 12b. Cette première position d'indexation est la position de livraison de l'embout équipé de la cage, et la position dans laquelle une connexion est réalisable. Lorsque donc, l'embout mâle 10 est introduit dans l'embout femelle, l'usager déplace relativement la cage et l'embase 3 de manière à atteindre la deuxième position d'indexation définie par les deux autres cintres inférieurs proches des oreilles 13 de l'épingle 12. Dans cette position, le cliquet 16 est relâché, constitue une butée anti-glissement relatif de la cage et de l'embase 3. La séparation des deux embouts 1 et 10 est impossible compte tenu de la résistance qu'oppose la cage à tout mouvement de séparation de ces deux embouts du fait de l'extrême rigidité du capot frontal 7 et de la quasi-indéformabilité de l'épingle 12 encliquetée dans la cage 8 d'une part au niveau des oreilles 13 et d'autre part au niveau des coudes de liaison des cliquets 15 et 16 au branches 12a et 12b.

On aura noté qu'en figures 5 et 6, l'épingle possède une branche 12b qui, au lieu d'avoir un cliquet 16, comporte une prolongation 17 parallèle à la section 2 de l'embout femelle 1 lorsque la position relative de la cage et de cet embout correspond à la première indexation donc à la position de connexion de l'embout, et qui est rabattue élastiquement derrière l'embase 3 pour venir s'accrocher dans une échancrure 18 de la paroi 8 de la cage 6 lorsque la position de verrouillage est atteinte.

On a représenté à la figure 3 une variante de réalisation de la cage selon l'invention dans laquelle la partie 9b de l'ouverture 9 en trou de serrure est bordée par une paroi 20 faisant saillie frontalement du capot 7. Cette paroi 20 a pour objet d'interdire le passage de la position de connexion à la position de verrouillage de la bague par rapport à l'embout femelle si la pénétration de l'embout 10 dans l'embout femelle 1 n'est pas complète la collerette 11 se trouvant encore à l'extérieur de la face frontale du capot 7.

## Revendications

1. Raccord à sécurité augmentée comportant :
- un embout femelle (1) définissant un logement (2) étagé,
- un embout mâle (10) avec une collerette (11), dont les diamètres extérieurs correspondent à ceux du logement étagé de l'embout femelle (1),
- une bague de verrouillage (4) mobile transversalement dans une embase (3) de l'embout femelle (1), située à l'entrée du logement de ce dernier,
- une cage de verrouillage supplémentaire (6) dont une paroi forme un capot (7) frontal à l'extrémité de l'embout femelle, montée à coulissement sur l'embase (3) de la bague (4) de verrouillage entre une position de connexion autorisant le passage de la collerette (11) au travers du capot (7) frontal de cette cage, et une position de verrouillage interdisant le passage de cette collerette au travers de ce capot frontal, **caractérisé en ce que** la cage (6) comporte, parallèlement au capot (7) et en arrière de celui-ci, une épingle. (12) en fil métallique dont les branches élastiques définissent chacune les deux positions susdites par correspondance de forme avec l'élément femelle (1).

2. Raccord à sécurité augmentée selon la revendication 1, **caractérisé en ce que** l'extrémité de chaque branche (12a, 12b) de l'épingle (12) comporte un cliquet (15, 16) de retenue de la cage sur l'embout femelle (1) dans chacune des deux positions susdites.

3. Raccord à sécurité augmentée selon la revendication 1, **caractérisé en ce que** l'une des branches (12b) de l'épingle possède une section (17) d'extrémité susceptible d'être rabattue et maintenue transversalement à l'embout femelle (1) derrière l'embase (3) lorsque la cage (6) est dans sa position de verrouillage.

4. Raccord à sécurité augmentée selon l'une quelconque des revendications précédentes, **caractérisé en ce que** le capot (7) comporte une ouverture (9) en trou de serrure.

5. Raccord à sécurité augmentée selon la revendication 4, **caractérisé en ce que** la partie la plus étroite (9b) de l'ouverture (9) est bordée d'une paroi (20) en saillie de la face frontale du capot (7).

6. Raccord à sécurité augmentée selon l'une quelconque des revendications précédentes, **caractérisé en ce que** la cage (6) est métallique.

## Claims

1. A coupling with increased safety, the coupling comprising:
· a female endpiece (1) defining a stepped housing (2);
· a male endpiece (10) with a collar (11), the outside diameters thereof corresponding to the diameters of the stepped housing in the female endpiece (1);
· a locking ring (4) movable transversely in a base (3) of the female endpiece (1), situated at the entrance to the housing therein; and
· an additional locking cage (6) having a wall forming a front cap (7) at the end of the female endpiece and mounted to slide on the base (3) of the locking ring (4) between a connection position allowing the collar (11) to pass through the front cap (7) of said cage, and a locking position preventing said collar from passing through said front cap;
the coupling being **characterized in that** the cage (6) includes a metal clip (12) extending parallel to the cap (7) and located behind it, the clip having resilient limbs each defining the two above-mentioned positions by shapes matching the female element (1).

2. A coupling with increased safety according to claim 1, **characterized in that** the end of each limb (12a, 12b) of the clip (12) has a catch (15, 16) for retraining the cage on the female endpiece (1) in each of the two above-mentioned positions.

3. A coupling with increased safety according to claim 1, **characterized in that** one of the limbs (12b) of the clip possesses an end section (17) suitable for being folded down and held transversely to the female endpiece (1) behind the base (3) when the cage (6) is in its locking position.

4. A coupling with increased safety according to any preceding claim, **characterized in that** the cap (7) includes a keyhole-shaped opening (9).

5. A coupling with increased safety according to claim 4, **characterized in that** the narrower portion (9b) of the opening (9) is bordered by a wall (20) projecting from the front face of the cap (7).

6. A coupling with increased safety according to any preceding claim, **characterized in that** the cage (6) is made of metal.

## Patentansprüche

1. Kupplung mit verbesserter Sicherheit, umfassend:
- ein weibliches Anschlussstück (1), das eine gestufte Aufnahme (2) definiert,
- ein männliches Anschlussstück (10) mit einem Kragen (11), deren Außendurchmesser denen der gestuften Aufnahme des weiblichen Anschlussstückes (1) entsprechen,
- einen Verriegelungsring (4), der in einer Grundplatte (3) des weiblichen Anschlussstückes (1) in Querrichtung bewegbar ist und sich am Eingang der Aufnahme des weiblichen Anschlussstückes befindet,
- ein zusätzliches Verriegelungsgehäuse (6), von dem eine Wand eine vordere Abdeckung (7) am Ende des weibliches Anschlussstücks bildet und das an der Grundplatte (3) des Verriegelungsrings (4) zwischen einer Verbindungsstellung, die den Durchtritt des Kragens (11) durch die vordere Abdeckung (7) dieses Gehäuses gestattet, und einer Sperrstellung bewegt werden kann, die den Durchtritt dieses Kragens durch diese vordere Abdeckung sperrt, **dadurch gekennzeichnet, dass** das Gehäuse (6) parallel zur Abdeckung (7) und hinter derselben eine Klammer (12) aus Metalldraht umfasst, deren elastische Schenkel jeweils die beiden oben genannten Stellungen durch Formübereinstimmung mit dem weiblichen Anschlussstück (1) definieren.

2. Kupplung mit verbesserter Sicherheit nach Anspruch 1, **dadurch gekennzeichnet, dass** das Ende jedes Schenkels (12a, 12b) der Klammer (12) ein Rastelement (15, 16) zum Halten des Gehäuses an dem weiblichen Anschlussstück (1) in jeder der beiden oben genannten Stellungen umfasst.

3. Kupplung mit verbesserter Sicherheit nach Anspruch 1, **dadurch gekennzeichnet, dass** einer der Schenkel (12b) der Klammer einen Endabschnitt (17) hat, der dazu geeignet ist, umgelegt und quer zum weiblichen Anschlussstück (1) hinter der Grundplatte (3) gehalten zu werden, wenn das Gehäuse (6) in seiner Sperrstellung ist.

4. Kupplung mit verbesserter Sicherheit nach einem der vorhergehenden Ansprüche, **dadurch gekennzeichnet, dass** die Abdeckung (7) eine schlüssellochförmige Öffnung (9) umfasst.

5. Kupplung mit verbesserter Sicherheit nach Anspruch 4, **dadurch gekennzeichnet, dass** der schmalste Abschnitt (9b) der Öffnung (9) von einer Wand (20) eingefasst ist, die von der Vorderseite der Abdeckung (7) absteht.

6. Kupplung mit verbesserter Sicherheit nach einem der vorhergehenden Ansprüche, **dadurch gekennzeichnet, dass** das Gehäuse (6) aus Metall ist.
